## Europäisches Patentamt
## European Patent Office
## Office européen des brevets

(19)

(11) Veröffentlichungsnummer: **0 021 409**
**B1**

(12) ## EUROPÄISCHE PATENTSCHRIFT

(45) Veröffentlichungstag der Patentschrift:
**22.12.82**

(21) Anmeldenummer: **80103570.0**

(22) Anmeldetag: **24.06.80**

(51) Int. Cl.³: **C 09 D 5/34,** C 09 K 3/10,
C 08 L 61/14

(54) Schwindungsarme säurehärtende Mischungen für Furankitte und Verfahren zu deren Herstellung.

(30) Priorität: **28.06.79 DE 2926053**

(43) Veröffentlichungstag der Anmeldung:
**07.01.81 Patentblatt 81/1**

(45) Bekanntmachung des Hinweises auf die Patenterteilung:
**22.12.82 Patentblatt 82/51**

(84) Benannte Vertragsstaaten:
**AT BE CH DE FR GB IT LI NL SE**

(56) Entgegenhaltungen:
**AT-B-342 172**
**DD-A-18 126**
**DE-A-1 494 099**
**DE-A-2 750 704**
**US-A-3 755 229**

(73) Patentinhaber: **HOECHST AKTIENGESELLSCHAFT,**
**Postfach 80 03 20, D-6230 Frankfurt/Main 80 (DE)**

(72) Erfinder: **Hesse, Wolfgang, Dr., Pfingstbornstrasse 83,**
**D-6200 Wiesbaden (DE)**
Erfinder: **Lorentz, Guido, Dr., Auf der Oes 14,**
**D-6308 Butzbach (DE)**
Erfinder: **Rauhut, Klaus, Dr., Pfingstbornstrasse 13,**
**D-6200 Wiesbaden (DE)**

Schwindungsarme säurehärtende Mischungen für Furankitte und Verfahren zu deren Herstellung

Die Erfindung bezieht sich auf säurehärtende Mischungen, die als Bindemittel Furanharze enthalten. Es ist bekannt, Polykondensate des Furfurylalkohols als Bindemittel für säurehärtende Kitte zu verwenden. Als zweite Hauptkomponente der Kitte dienen Füllstoffe, denen als Katalysator Säuren oder säureabspaltende Substanzen beigemischt sind, die ohne Wärmezufuhr eine Härtung bewirken.

Die Verarbeitung als Kitt erfolgt so, dass die Lösung des Furanharzes mit dem Füllstoff und Katalysator oder Härter (im folgenden wird diese Mischung als Füllstoff bezeichnet) unmittelbar vor dem Gebrauch gemischt und der dadurch erhaltene Kitt nach üblichen Methoden auf oder zwischen die zu verkittenden Materialien gebracht wird. Zur Bewertung des Kittes werden die Eigenschaften des Furanharzes, die Eigenschaften des Kittes nach dem Mischen des Furanharzes mit dem Füllstoff, der Verlauf der Härtung und die chemischen und physikalischen Eigenschaften des Endproduktes betrachtet. Das Furanharz muss einen niedrigen Kondensationsgrad besitzen, damit es niedrigviskos fliesst und den Füllstoff gut benetzt. Aus dem gleichen Grund muss eine gute Lagerbeständigkeit vorhanden sein. Der Kondensationsgrad darf sich bei der Lagerung nur unwesentlich erhöhen, denn ein übermässiger Viskositätsanstieg würde zur schlechteren Benetzung des Füllstoffes und damit zu Verarbeitungsfehlern führen. Nach dem Mischen des Füllstoffes mit dem Furanharz setzt durch die Einwirkung des Katalysators sofort eine Vergrösserung des Furanharzmoleküls ein, was zum Verlust der Verarbeitungskonsistenz führt. Die zwischen Anmischen und diesem Verlust liegende Zeit, die Gebrauchsdauer, soll im allgemeinen ½ bis 2 h betragen, damit eine bequeme Verarbeitung möglich ist. Nach der Verarbeitung muss der Kitt bei Raumtemperatur nach möglichst kurzer Zeit gehärtet sein und Beständigkeit gegen Chemikalien und Lösemittel gewinnen.

Die für die Herstellung von säurehärtenden Kitten bisher üblichen Furanharze ergeben Kitte mit hervorragender Chemikalienbeständigkeit. Insbesondere sind Furankitte absolut alkalibeständig. Nachteile von Furankitten bestehen aber häufig in der Begrenzung der thermischen Beständigkeit auf 180 bis etwa 230° C und insbesondere in der ausserordentlich starken Nachschwindung nach der Verarbeitung. Diese Nachschwindung ist so stark, dass Furanharze bei der Herstellung von säurefesten Fussböden oder Wandauskleidungen infolge Ablösung von den Plattenflanken und von Querrissen in der Fuge Schwierigkeiten bereiten können. Es war deshalb erwünscht, einen Kitt herzustellen, der diese Nachteile nicht aufweist.

Es ist ferner bekannt, Furanharze auf vielfältige Weise zu modifizieren. So kann man Furfurol mit Phenol zu Novolaken umsetzen, die zur Herstellung von Phenolharzpressmassen dienen. Diese Harze sind aber schon wegen ihrer zu hohen Eigenviskosität nicht für Kitte brauchbar. Es ist auch bekannt, Kondensate des Furfurylalkohols mit Harnstoff und Formaldehyd zu modifizieren und diese Polykondensate als Kernsandbinder zu verwenden. Aber auch die bekannte Einbeziehung von Phenol in diese Modifizierung verändert nicht die mangelnde Chemikalienbeständigkeit und geringe thermische Beständigkeit dieser Polykondensate, die bei der Herstellung von Kernsandbindemitteln zweckmässig, ja notwendig ist.

Auch die schon beschriebene Reaktion von Furfurylalkohol mit Phenol oder mit Resorcin führt nicht zu geeigneten Kittharzen, sondern zu Harzen, die als Bindemittel für Leime, Pressmassen oder Lacke brauchbar sind. Auch die Umsetzung zwischen Phenolen oder Hydroxybenzylalkohol und Furfurylalkohol liefert kein brauchbares Kittharz. Beim Versuch, derartige Polykondensate mit einem Füllstoff zu mischen, der saure Katalysatoren enthält, läuft eine stürmische Polykondensationsreaktion ab, die der von nicht modifiziertem oder in Harze übergeführtem Furfurylalkohol entspricht. Das so gewonnene Härtungsprodukt schrumpft und ist zudem sehr anfällig gegen Alkali.

Aufgrund der erwähnten Nachteile wurde die Herstellung von Furanharzen für Kitte bisher noch nicht beschrieben.

Eine weitere Druckschrift AT-B Nr. 342172 beschreibt die Herstellung eines Kittes, wobei

A) Mischungen aus Methylolphenol und Methylolalkylphenol in Gegenwart eines Katalysators teilweise veräthert werden,

B) der Katalysator entfernt wird, und

C) das Harz in reaktiven Lösungsmitteln, z.B. Furfurylalkohol, gelöst und mit Kittmehl versetzt wird. Damit liegt ein Gemisch von 2 getrennten Substanzen, nämlich Phenolharz einerseits und dem Lösungsmittel Furfurylalkohol andererseits vor.

Diese Kitte haben sich zwar gut bewährt, doch war es erwünscht, ihre Eigenschaften noch zu verbessern.

Gegenstand der Anmeldung ist nun eine schwindungsarme, säurehärtende Mischung für Kitte auf der Basis von furanmodifiziertem Phenolharz, die dadurch gekennzeichnet ist, dass sie als Bindemittel

A) ein Reaktionsprodukt von Furfurylalkohol mit einem Hydroxymethylgruppen enthaltenden substituierten Phenolresol auf der Basis bifunktionellen Alkylphenols oder Aralkylphenols mit 3 bis 20 C-Atomen im Alkylrest oder Arylphenol oder einer Kombination mit einem untergeordneten Anteil an unsubstituierten Phenolen, wobei im substituierten Phenolresol mindestens 75% der reaktiven H-Atome des Kerns durch Reaktion mit Formaldehyd substituiert sind, und pro Hydroxymethylgruppe mehr als 0,5 mol Furfurylalkohol umgesetzt worden sind, und

B) mindestens einen reaktiven Verdünner in einem Gewichtsverhältnis zum Harz A von (0,4 bis 1,5) : 1 enthält.

Nach einer Ausführung der Erfindung ist vorgesehen, dass die Mischung

A) ein Reaktionsprodukt von Furfurylalkohol mit einem Hydroxymethylgruppen enthaltenden substituierten Phenolresol auf der Basis bifunktionellen Alkylphenols oder Aralkylphenols mit 3 bis 20 C-Atomen im Alkylrest oder Arylphenol oder einer Kombination mit einem untergeordneten Anteil an unsubstituierten Phenolen, wobei im substituierten Phenolresol mindestens 75% der reaktiven H-Atome des Kerns durch Reaktion mit Formaldehyd substituiert sind und pro Hydroxymethylgruppe mehr als 0,5 mol Furfurylalkohol umgesetzt worden sind,

B) mindestens einen reaktiven Verdünner in einem Gewichtsverhältnis zum Harz A von (0,4 bis 1,5) : 1,

C) mindestens einen Füllstoff, und

D) mindestens einen Härter

enthält, wobei das Gewichtsverhältnis zwischen der Summe der Komponenten A und B zu der der Komponenten C und D 1 : (1 bis 7) beträgt.

Überraschenderweise zeigen Kitte aus den erfindungsgemässen Mischungen neben einer hohen Lagerbeständigkeit sämtliche positiven Eigenschaften von Furanharzkitten, eine ausgezeichnete chemische Beständigkeit und im Gegensatz zu den bisher üblichen Kitten eine thermische Beständigkeit bis zu Temperaturen von 320° C. Dazu sind sie noch sehr schwindungsarm. So zeigen sie bei der Messung der Nachschwindung in Anlehnung an ASTM C 358 wesentlich geringere Werte als die herkömmlichen Furankitte. Ausserdem weisen sie bei guter Gebrauchsdauer eine verkürzte Härtungszeit auf und sind trotzdem gegen Chemikalien ausserordentlich beständig.

Die Alkylphenole in dem Alkylphenolresol sind bifunktionell. Es können para- oder ortho-Monoalkylphenole wie o-Propyl-, o-Isopropyl, o-n-Butyl-, o-sek.- oder tert.- Butyl-, o-Isononyl-, p-n-oder-tert.-Butyl-, p-n-Hexyl-, p-Cyclohexyl-, p-Isooctyl-, p-Isononyl- und p-Isododecylphenol, ferner Arylphenole, wie o- oder p-Phenylphenol, oder Aralkylphenole, wie die o- und p-Substitutionsprodukte von Styrol oder anderen Vinylaromaten, wie α-Methylstyrol, Vinyltoluol, mit Phenol, jeweils einzeln oder im Gemisch, verwendet werden. Die Alkylreste können geradkettig, verzweigt oder cyclisch sein und 3 bis 20, vorzugsweise 4 bis 12 C-Atome enthalten. Die Phenolkomponente kann auch untergeordnete Mengen höheralkylierter Phenole enthalten, wie Di- und/oder Trialkylphenole (soweit diese noch wenigstens eine für die Reaktion mit Formaldehyd verfügbare Stelle enthalten) oder unsubstituierter Phenole oder mehrwertiger Phenole, z.B. Diphenylolpropan, und zwar in einem Anteil von bis zu 30 mol%. Es können solche Alkylphenole, z.B. auch als Gemische, verwendet werden, wie sie bei der Alkylierung von Phenol mit ungesättigten Verbindungen, z.B. Alkylenen mit 3 bis 20 C-Atomen anfallen.

Im Rahmen der Erfindung liegt auch die Herstellung der erfindungsgemässen Mischungen für Kitte, die dadurch gekennzeichnet ist, dass Furfurylalkohol mit einem Hydroxymethylgruppen enthaltenden Alkylphenolresol der oben unter A genannten Art bei erhöhter Temperatur umgesetzt, das Reaktionsprodukt in einem reaktiven Verdünner gelöst, so dass diese Lösung im allgemeinen einen Festharzanteil von 40 bis 70 Gew.% hat, unmittelbar vor ihrer Anwendung mit einem Füllstoff und einem Härter vermischt wird, wobei das Gewichtsverhältnis der Komponenten in dem oben angegebenen Bereich liegt.

Die modifizierten Furanharze werden in Lösung in den reaktiven Verdünnungsmitteln eingesetzt, z.B. in Benzylalkohol, niedermolekularen Epoxydverbindungen, wie Phenylglycidyläther, Diphenylolpropandiglycidyläther, vor allem aber in Furanverbindungen wie Furfurol, Difuryläther, vorzugsweise jedoch Furfurylalkohol. Dieser kann z.B. von der Reaktion mit dem Resol her als überschüssige Komponente vorliegen.

Als Füllstoff können Gesteinsmehle, Bariumsulfat, Quarzmehl und vorzugsweise Koksmehl oder Graphitmehl, z.B. als Kunstgraphit verwendet werden.

Als Härtungskatalysatoren können a) Säuren, wie Schwefelsäure, Salzsäure, Phosphorsäure, Oxalsäure, Sulfonsäuren, wie Amidosulfonsäure, Mono- und Disulfonsäuren von Benzol, Toluol, Xylol, ferner Naphthalindisulfonsäure und/oder b) säureabspaltende Substanzen, wie Sulfochloride der unter a genannten Sulfonsäuren, z.B. Toluol- oder Benzolsulfochlorid, Alkylester dieser Sulfonsäuren oder saure Schewefelsäureester und/oder c) saure Salze der Schwefelsäure oder der Phosphorsäure, vorzugsweise deren Natriumsalze, verwendet werden. Ihr Anteil beträgt in der Regel 0,1 bis 1, vorzugsweise 0,2 bis 0,5 Äquivalent, bezogen auf phenolische Hydroxylgruppen.

Das als Ausgangsstoff dienende Hydroxymethylgruppen enthaltende Resol wird aus der Phenolharzkomponente und mehr als 1,5, vorzugsweise 2 mol Formaldehyd pro Phenolgruppe in Gegenwart von basischen Kondensationskatalysatoren, unter solchen Bedingungen hergestellt, dass die Bildung höherer Kondensate weitgehend vermieden wird. Im allgemeinen haben die so erhaltenen furanmodifizierten Phenolharze eine Viskosität von 100 bis 10 000, vorzugsweise 200 bis 4000 mPa·s/20° C. Bei dieser Kondensation sind mässige Reaktionstemperaturen zwischen 20 und 80° C, vorzugsweise zwischen 30 und 60° C, sowie eine relativ hohe Katalysatorkonzentration, z.B. 5 bis 100, vorzugsweise 10 bis 50, insbesondere 16 bis 30 Äquivalent%, jeweils bezogen auf die phenolischen OH-Gruppen zweckdienlich. Als Katalysatoren für diese Reaktion eignen sich üblicherweise Basen, wie Alkalimetallhydroxyde, Erdalkalimetallhydroxyde oder auch tertiäre Amine und quarternäre Ammoniumbasen. Nach der Kondensation wird der Katalysator z.B. mit organischen oder anorganischen Säuren neutralisiert und das entstehende Salz durch Auswaschen entfernt.

Die erfindungsgemässe Umsetzung der Polyhydroxymethylalkylphenole mit Furfurylalkohol erfolgt im allgemeinen bei erhöhter Temperatur, z.B.

bis zu 220, vorzugsweise bis zu 190° C, unter gleichzeitiger Abführung von bei der Reaktion gebildetem Wasser. Sie setzt bei etwa 100 bis 120° C ein. Die Entfernung des Wassers kann mit einer Destillationskolonne erfolgen; vorzugsweise wird das Wasser in Gegenwart eines Schleppmittels azeotrop abdestilliert. Als Schleppmittel können Aromaten verwendet werden, wie Toluol oder Xylol, oder aliphatische Kohlenwasserstoffe oder andere nicht wassermischbare Stoffe, z.B. dieselben, die als Lösungsmittel bei der Herstellung der Harze dienen. Nach einer anderen Ausführungsform kann die Umsetzung zwischen Furfurylalkohol und dem Resol auch in der Schmelze erfolgen, jedoch ist die Umsetzung in Lösungsmitteln bevorzugt.

Das unter Wasserabspaltung entstehende Harz ist thermisch sehr stabil und hält die angewendeten Reaktionstemperaturen, die bis zu 220° C betragen können, ohne weiteres aus. Das ist aber nur dann der Fall, wenn erfindungsgemäss als Ausgangsstoffe alkylierte Phenol verwendet werden, deren Funktionalität gegenüber Formaldehyd maximal 2 beträgt. Würde man polyfunktionelle Phenole, z.B. Phenol, Diphenylolpropan, Resorcin, Kresol oder andere gegenüber Formaldehyd mehr als bifunktionelle Verbindungen allein als Ausgangsstoff wählen, wäre die Reaktion nur durchführbar, wenn mit einem erheblichen Unterschuss an Formaldehyd gearbeitet wird. Dies würde aber zu unbrauchbaren Produkten führen. Dagegen ist es möglich, der Umsetzung zu Hydroxymethylverbindungen eine sauer katalysierte Reaktion des Alkylphenols mit Formaldehyd zu Novolaken vorzuschalten, sofern nicht mehr als 0,7, vorzugsweise nicht mehr als 0,5 mol Formaldehyl/mol Alkylphenol verwendet werden. Dann wäre der so gebildete Novolak in einer zweiten Stufe unter den vorgenannten alkalischen Bedingungen mit weiterem Formaldehyd zum Resol umzusetzen.

Die erfindungsgemässe Umsetzung kann in Gegenwart eines Furfurylalkoholüberschusses durchgeführt werden, d. h., dass mehr als 1 mol Fufurylalkohol je Hydroxymethyl eingesetzt wird. Der überschüssige Furfurylalkohol kann als reaktiver Verdünner im Harz verbleiben. Die Mengenverhältnisse können auch so gewählt werden, dass der Furfurylalkoholüberschuss so gross ist, dass er nach der Umsetzung und gegebenenfalls nach Entfernen des Schleppmittels ausreicht, das Harz ausreichend zu verdünnen. Es ist aber auch möglich, die reaktiven Lösungsmittel später zuzusetzen.

Die Lagerfähigkeit der Harzlösungen ist praktisch unbegrenzt. Die Herstellung des Kittes erfolgt unmittelbar vor der Anwendung durch Vermischen der Furanharzlösung mit dem Füllstoff.

In den nachstehenden Beispielen sind T Gewichtsteile und % Gew.%.

*Beispiele*

*1a) Herstellung des Harzes – Nonylphenol-modifiziertes Harz*

In einem Reaktionsgefäss, welches mit Rühreinrichtung, Thermometer, Dosiereinrichtung, Wasserabscheider, Rückflusskühler sowie Vorrichtung zur Vakuumdestillation ausgerüstet ist, werden 792 T Monononylphenol, welches 2% Dinonylphenol enthält, 45,6 T Diphenylolpropan und 400 T Xylol gemischt und auf 50° C erwärmt. Dann lässt man 120 T Natronlauge (33%ig) zulaufen. Dabei steigt die Temperatur auf 60° C an. Danach gibt man nach der Massgabe der exothermen Reaktion 648 T (37%ig) wässrigen Formaldehyds zu. Nach sechsstündigem Rühren bei 60° C beträgt der Gehalt an freiem Formaldehyd 2%. Dann wird der Ansatz mit 178 T 25%iger Schwefelsäure auf pH 5,5 eingestellt und die sich abtrennende wässrige Phase abgesaugt. Man gibt 784 T Furfurylalkohol zu und füllt die Vorlage des Wasserabscheiders mit Xylol.

Nun wird unter Rückführung des Lösungsmittels unter Normaldruck destilliert, wobei man durch allmähliche Wegnahme des Xylols die Temperatur bis 170° C steigert. Dabei fallen 205 ml wässrige Phase an, die man verwirft. Nun kühlt man auf 130° C ab und destilliert bei einem Druck von 25 mbar das restliche Schleppmittel ab und gibt 1119 T Furfurylalkohol zu. Die nun fertige Harzlösung fällt mit einer Ausbeute von 2466 T an und besitzt einen Rückstand (1 h/170° C) von 50%. Die Viskosität beträgt 775 mPa · s/20° C.

*b) Herstellung des Kitts*

Für die kittechnische Prüfung wird aus 93,5 T Koksmehl, 0,5 T kristalliner Phosphorsäure, 4 T Amidosulfonsäure und 2 T Oxalsäure ein Füllstoff-Katalysatorgemisch durch Verarbeiten in einem Trommelmischer hergestellt. 100 T dieses Kittmehles werden mit 55 T der Harzlösung zu einem verbrauchsfähigen Kitt verrührt. Dieser hat eine Gebrauchsdauer von 45 min. Nach 36 h ist eine Shorehärte D von 40 erreicht.

*c) Physikalische Prüfung*

Für die Bestimmung der chemischen Beständigkeit weden aus dem Kitt zylindrische Körper mit einer Höhe und einem Durchmesser von je 25 mm hergestellt und diese 8 d lang bei Raumtemperatur gelagert. Nach dieser Zeit sind die Prüfkörper beständig gegen kochende 70%ige Schwefelsäure, kochende konzentrierte Salzsäure, gegen 130° C heisse konzentrierte Phosphorsäure, gegen konzentrierte und verdünnte Natronlauge und andere Alkalilösungen sowie polare organische Lösungsmittel, wie Aceton und Butylacetat. Die Messung der Linearschwindung erfolgt anzylindrischen Prüfkörpern mit 25 mm Durchmesser und 90 mm Länge, an deren Ende Messmarkierungen aus Glas angebracht sind. Die Gesamtlänge des Prüfkörpers einschliesslich der Messmarkierungen beträgt ca. 100 mm. Die Prüfung erfolgt in Anlehnung an ASTM C 358. Die erste Längenmessung erfolgt 24 h nach Herstellung der Prüfkörper und dient als Ausgangswert. Innerhalb des Beobachtungszeitraums von 209 d beträgt die Schwindung bei Raumtemperaturlagerung 0,2%. Werden die Prüfkörper bei 60° C gelagert, beträgt die Schwindung nach 200 d 0,22%.

*2a) Herstellung des Harzes – Butylphenol-modifiziertes Harz*

In der Apparatur aus Beispiel 1 werden 1200 T p.-tert.-Butylphenol, 800 T Xylol, 240 T Natronlauge und 1296 T wässriger Formaldehyd (37%ig) wie im Beispiel 1 umgesetzt, bis der Formaldehydgehalt 1,7% beträgt. Dann wird wie im Beispiel 1 mit 25%iger Schwefelsäure auf pH 5,5 eingestellt und aufgearbeitet. Anschliessend werden 1568 T Furfurylalkohol zugegeben und wie im Beispiel 1 mit einer Maximaltemperatur von 177° C 450 ml wässrige Phase azeotrop abdestilliert. Nach der Abdestillation des Schleppmittels bei 130° C/ 100 mbar setzt man 1225 T Furfurylalkohol zu und erhält 3890 T einer Furanharzlösung, die einen Rückstand von 60% (1 h/170° C) und eine Viskosität von 4750 mPa·s/20° C besitzt.

*b) Herstellung des Kitts*

Für die kittechnische Prüfung wird aus 93 T Kohlenstoff, 2 T Oxalsäure, 1 T kristallisierter Phosphorsäure und 4 T eines aromatischen Sulfochlorids ein Kittmehl hergestellt. Für die Herstellung eines Kittes werden 45,8 T der 60%igen Harzlösung mit 92 T Furfurol verdünnt und diese Lösung mit 100 T des Kittmehles vermischt. Der daraus hergestellte Kitt hat eine Gebrauchsdauer von 60 min. Nach 36 h weist er eine Shorehärte D von etwa 45 auf.

*c) Physikalische Prüfung*

Es werden wie im Beispiel 1 Prüfkörper für die Chemikalienbeständigkeit und die Messung der Nachschwindung in Anlehnung an ASTM C 358 hergestellt und 8 d bei Raumtemperatur gelagert. Die Prüfkörper sind beständig gegen kochende 70%ige Schwelfelsäure, kochende konzentrierte Salzsäure, kochende Essigsäure, siedende konzentrierte und verdünnte Natronlauge sowie gegen siedendes Toluol und siedendes Äthylacetat. Werden die Prüfkörper zusätzlich zu der 8tägigen Raumtemperaturlagerung noch 16 h bei 90° C getempert, so sind diese auch gegen Aceton und chlorierte Kohlenwasserstoffe beständig.

Die Nachschwindung beträgt nach 61 d Lagerung bei Raumtemperatur nur 0,1%. Bei 60° C-Lagerung weist der Prüfkörper nach 28 d überhaupt keine Schwindung auf.

*3a) Herstellung eines Nonylphenol-modifizierten Harzes*

In der Apparatur vom Beispiel 1 werden wie im Beispiel 1 1760 T Mononylphenol mit einem Gehalt von 2% Dinonylphenol, 800 T Xylol, 240 T Natronlauge (33%ig) und 1166 T Formaldehyd bei 60° C umgesetzt, bis der Formaldehydgehalt 2% beträgt. Nach Neutralisieren des Ansatzes mit 25%iger Schwelfelsäure wird die wässrige Phase abgetrennt, das Harz mit 1568 T Furfurylalkohol versetzt und anschliessend wie im Beispiel 1 die wässrige Phase bei einer Maximaltemperatur von 182° C abdestilliert. Nach Entfernen des Schleppmittels wie im Beispiel 1 und Verdünnen des Ansatzes mit 1187 T Furfurylalkohol fallen 5170 T einer Furanharzlösung an. Diese besitzt einen Rückstand von 50,2% (1 h/170° C) und eine Viskosität von 500 mPa·s/20° C.

*b) und c) Herstellung des Kitts und physikalische Prüfung*

Für die Prüfung werden wie im Beispiel 2 mit demselben Kittmehl wie nach Beispiel 2 Prüfkörper für die Messung der Chemikalienbeständigkeit und der Nachschwindung hergestellt. Die Chemikalienbeständigkeit ergibt die gleichen Ergebnisse wie bei Beispiel 2, wobei aber die zur Beständigkeit gegen Chloroform und Aceton erforderliche Temperzeit bei 90° C auf 8 h verkürzt werden kann. Die Nachschwindung beträgt nach 60 d bei Raumtemperatur 0,1%, nach 28 d bei 60° C findet kein Schwinden statt.

*4a) Herstellung eines Styrylphenol-modifizierten Harzes*

Die Apparatur aus Beispiel 1 wird auf Rückfluss geschaltet. 752 T Phenol werden geschmolzen und mit 0,8 T konzentrierter Schwefelsäure versetzt. Der Ansatz wird auf 100° C erwärmt und nach Massgabe der exothermen Reaktion werden 832 T Styrol zudosiert. Dabei steigt die Temperatur auf 140° C an. Wenn alles Styrol zugegeben ist, hält man noch 1 h bei 140° C und kühlt dann den Ansatz auf 60° C ab. Während der Abkühlung setzt man 240 T Natronlauge (33%ig) zu. Sind 60° C erreicht, gibt man nach Massgabe der exothermen Reaktion innerhalb 1 h 1296 T wässrigen Formaldehyd (37%ig) zu und setzt nun bei 60° C um, bis nach 4 h der Gehalt an freiem Formaldehyd 1,8% beträgt. Nun stellt man mit 371 T 25%iger Schwefelsäure einen pH von 5,2 ein, rührt 800 T Toluol ein und saugt anschliessend die wässrige Phase ab. Zu dem im Kolben verbliebenen Harz gibt man 1568 T Furfurylalkohol, schaltet auf Umlaufdestillation (= unter Rückführung des Lösungsmittels) und füllt die Vorlage des Wasserabscheiders mit Toluol. Man destilliert, trennt 667 T einer wässriger Phase ab. Dabei steigt die Temperatur bis auf 160° C ab. Nach der Abkühlung auf 110° C destilliert man bei einem Druck von 100 mbar das Schleppmittel und verdünnt den Ansatz anschliessend mit 1084 T Furfurylalkohol. Die anfallende Furanharzlösung (3988 T) besitzt einen Rückstand von 60,1% (1 h/170° C) und weist eine Viskosität von 6057 mPa·s/20° C auf.

*b) und c) Herstellung des Kitts und physikalische Prüfung*

Für die kittechnische Prüfung werden 45,8 T der Harzlösung mit 9,2 T Furfurylalkohol und mit 100 T des Kittmehles aus Beispiel 2 gemischt. Der Kitt hat eine Gebrauchsdauer von 55 min und erreicht nach 24 h bei Raumtemperatur eine Shorehärte D von 38. Die Chemikalienbeständigkeit ergibt die gleichen Ergebnisse wie im Beispiel 2, wobei aber die zur Beständigkeit gegen Chloroform und Aceton erforderliche Nachtemperzeit bei 90° C auf 8 h verkürzt werden kann. Die Nachschwindung beträgt nach 60 d bei Raumtemperatur 0,1%, nach 28 d bei 60° C findet kein Schwinden statt, der Prüfkörper hat sich im Gegenteil um 0,004% ausgedehnt.

**Patentansprüche**

1. Schwindungsarme, säurehärtende Mischungen für Kitte auf der Basis von furanmodifiziertem Phenolharz, dadurch gekennzeichnet, dass sie als Bindemittel

A) ein Reaktionsprodukt von Furfurylalkohol mit einem Hydroxymethylgruppen enthaltenden substituierten Phenolresol auf der Basis bifunktionellen Alkylphenols oder Aralkylphenols mit 3 bis 20 C-Atomen im Alkylrest oder Arylphenol oder einer Kombination mit einem untergeordneten Anteil an unsubstituierten Phenolen, wobei im substituierten Phenolresol mindestens 75% der reaktiven H-Atome des Kerns durch Reaktion mit Formaldehyd substituiert sind und pro Hydroxymethylgruppe mehr als 0,5 mol Furfurylalkohol umgesetzt worden sind, und

B) mindestens einen reaktiven Verdünner in einem Gewichtsverhältnis zum Harz A von (0,4 bis 1,5) : 1 enthalten.

2. Mischung nach Anspruch 1, dadurch gekennzeichnet, dass sie

A) ein Reaktionsprodukt von Furfurylalkohol mit einem Hydroxymethylgruppen enthaltenden substituierten Phenolresol auf der Basis bifunktionellen Alkylphenols oder Aralkylphenols mit 3 bis 20 C-Atomen im Alkylrest oder Arylphenol oder einer Kombination mit einem untergeordneten Anteil an unsubstituierten Phenolen, wobei im substituierten Phenolresol mindestens 75% der reaktiven H-Atome des Kerns durch Reaktion mit Formaldehyd substituiert sind und pro Hydroxymethylgruppe mehr als 0,5 mol Furfurylalkohol umgesetzt worden sind,

B) mindestens einen reaktiven Verdünner in einem Gewichtsverhältnis zum Harz A von (0,4 bis 1,5) : 1,

C) mindestens einen Füllstoff, und

D) mindestens einen Härter
enthält, wobei das Gewichtsverhältnis zwischen der Summe der Komponenten A und B zu der der Komponenten C und D 1 : (1 bis 7) vorzugsweise 1 : (1,5 bis 5) beträgt.

3. Mischung nach einem der beiden Ansprüche 1 oder 2, gekennzeichnet durch wenigstens eines der Merkmale, dass das bifunktionelle Alkylphenol bzw. Aralkylphenol einen Alkylrest mit 4 bis 12 C-Atomen aufweist, dass im substituierten Phenolresol 90 bis 100% der reaktiven H-Atome des Kerns durch Reaktion mit Formaldehyd substituiert sind, dass pro Hydroxymethylgruppe mehr als 0,8 mol Furfurylalkohol umgesetzt worden sind.

4. Mischung nach einem oder mehreren der Ansprüche 1 bis 3, dadurch gekennzeichnet, dass das furanmodifizierte Phenolharz eine Viskosität von 100 bis 10000, vorzugsweise 200 bis 4000 mPa · s/20° C, aufweist.

5. Mischung nach einem oder mehreren der Ansprüche 1 bis 4, dadurch gekennzeichnet, dass das Harz ein Substitutionsprodukt aus Phenol und Vinylaromaten, vorzugsweise Styrol, als Aralkylphenol enthält, und dass der reaktive Verdünner eine Furanverbindung, vorzugsweise Furfurylalkohol, ist.

6. Mischung nach einem oder mehreren der Ansprüche 2 bis 5, dadurch gekennzeichnet, dass der Härter eine saure Substanz ist, die in einem Anteil von 0,1 bis 1, vorzugsweise 0,2 bis 0,5 Äquivalent, bezogen auf phenolische OH-Gruppen, vorliegt.

7. Mischung nach einem oder mehreren der Ansprüche 2 bis 6, dadurch gekennzeichnet, dass der Füllstoff in Form von Koks, Kunstgraphit, Quarz oder Bariumsulfat vorliegt.

8. Verfahren zur Herstellung von Mischungen für Kitte nach einem oder mehreren der Ansprüche 2 bis 7, dadurch gekennzeichnet, dass Furfurylalkohol mit einem Hydroxymethylgruppen enthaltenden Alkyl-, Aralkyl- oder Arylphenolresol der in den Ansprüchen 1 bis 7 genannten Art bei erhöhter Temperatur umgesetzt, das Reaktionsprodukt in einem reaktiven Verdünner gelöst und diese Lösung unmittelbar vor ihrer Anwendung mit einem Füllstoff und einem Härter vermischt wird, wobei das Gewichtsverhältnis der Komponenten A und B zu dem der Komponenten C und D 1 : (1 bis 7), vorzugsweise 1 : (1,5 bis 5), beträgt.

9. Verfahren nach Anspruch 8, dadurch gekennzeichnet, dass der Füllstoff in Form eines Gemisches mit dem Härter zugegeben wird.

10. Verfahren nach einem der beiden Ansprüche 8 oder 9, dadurch gekennzeichnet, dass die Lösung des Harzes in dem reaktiven Verdünner einen Festharzanteil von 40 bis 70 Gew.% hat.

**Claims**

Low-shrinkage, acid-hardening compositions for cements based on furan-modified phenolic resin, characterized in that they contain as a binder:

A) a reaction product of furfuryl alcohol with a substituted phenol resol containing hydroxymethyl groups and being based on bifunctional alkylphenol or aralkylphenol with 3 to 20 C-atoms in the alkyl group or arylphenol or a combination thereof with a minor amount of unsubstituted phenols, wherein in the substituted phenol resol at least 75% of the reactive H-atoms of the nucleus are substituted by reaction with formaldehyde and wherein more than 0.5 mol or furfuryl alcohol has been reacted per hydroxymethyl group, and

B) at least one reactive diluent in a weight ratio to resin A in the range from (0.4 to 1.5) : 1.

2. A composition according to claim 1, characterized in that it contains:

A) a reaction product of furfuryl alcohol with a substituted phenol resol containing hydroxymethyl groups and being based on a bifunctional alkylphenol or aralkylphenol with 3 to 20 C-atoms in the alkyl group or arylphenol or a combination thereof with a minor amount of unsubstituted phenols, wherein in the substituted phenol resol at least 75% of the reactive H-atoms of the nucleus are substituted by reaction with formaldehyde and wherein more than 0.5 mol of furfuryl alcohol has been reacted per hydroxymethyl group,

B) at least one reactive diluent in a weight ratio to resin A in the range from (0.4 to 1.5):1,

C) at least one filler, and

D) at least one hardener, wherein the weight ratio of the total of components A and B to the total of components C and D is 1:(1 to 7), preferably 1:(1.5 to 5).

3. Composition according to claim 1 or 2, characterized by at least one of the features, that the bifunctional alkylphenol and the aralkylphenol respectively has an alkyl radical having 4 to 12 C-atoms, that 90 to 100% of the reactive H-atoms of the nucleus of the substituted phenol resol have been substituted by reaction with formaldehyde, that more than 0.8 mol furfuryl alcohol have been reacted per hydroxymethyl group.

4. Composition according to one or more of claims 1 to 3, characterized in that the furan-modified phenol resin has a viscosity of from 100 to 10,000, preferably 200 to 4,000 mPa·s/20°C.

5. Composition according to one or more of claims 1 to 4, characterized in that the resin contains as an aralkylphenol a substitution product of phenol and a vinylaromatic compound, preferably styrene, and that the reactive diluent is a furan compound, preferably furfuryl alcohol.

6. Composition according to one or more of claims 2 to 5, characterized in that the hardener is an acidic substance, being present in an amount of from 0.1 to 1, preferably 0.2 to 0.5 equivalent, referred to the phenolic hydroxy groups.

7. Composition according to one or more of claims 2 to 6, characterized in that the filler is present in the form of coke, synthetic graphite, quartz or barium sulfate.

8. A process for the preparation of compositions for cements according to one or more of claims 2 to 7, characterized in that furfuryl alcohol is reacted at an elevated temperature with an alkyl-, aralkyl- or arylphenol-resol containing hydroxymethyl groups as defined in claims 1 to 7, the reaction product is dissolved in a reactive diluent and, immediately prior to its application, this solution is mixed with a filler and a hardener, wherein the weight ratio of the components A and B to that of components C and D is in the range from 1:(1 to 7), preferably from 1:(1.5 to 5).

9. Process according to claim 8, characterized in that the filler is added in the form of a mixture with the hardener.

10. Process according to claim 8 or 9, characterized in that the solution of the resin in the reactive diluent has a solids content of from 40 to 70% by weight.

**Revendications**

1. Mélanges à base d'une résine phénolique modifiée par du furanne, mélanges qui durcissent sous l'action d'un acide, se rétractent peu et sont utilisables pour des ciments, mélanges caractérisés en ce qu'ils contiennent comme liant:

A) un produit résultant de la réaction de l'alcool furfurylique avec un résol phénolique porteur de radicaux hydroxyméthyles à base d'un alkylphénol ou aralkylphénol bifonctionnel contenant de 3 à 20 atomes de carbone dans la partie alkylique ou d'un arylphénol ou d'une association avec une faible proportion de phénols non substitués, au moins 75% des atomes H réactifs du noyau, dans le résol phénolique substitué, étant substitués par réaction avec le formaldéhyde, et plus de 0,5 mol d'alcool furfurylique par radical hydroxyméthyle ayant pris part à la réaction, et

B) au moins un diluant réactif, dans un rapport pondéral par rapport à la résine A compris entre 0,4:1 et 1,5:1.

2. Mélange selon la revendication 1, caractérisé en ce qu'il contient:

A) un produit résultant de la réaction de l'alcool furfurylique avec un résol phénolique porteur de radicaux hydroxyméthyles à base d'un alkylphénol ou aralkylphénol bifonctionnel contenant de 3 à 20 atomes de carbone dans la partie alkylique ou d'un arylphénol ou d'une association avec une faible proportion de phénols non substitués, au moins 75% des atomes H réactifs du noyau, dans le résol phénolique substitué, étant substitués par réaction avec le formaldéhyde, et plus de 0,5 mol d'alcool furfurylique par radical hydroxyméthyle ayant pris part à la réaction,

B) au moins un diluant réactif, dans un rapport pondéral par rapport à la résine A compris entre 0,4:1 et 1,5:1,

C) au moins une charge, et

D) au moins un durcisseur,
le rapport pondéral de la somme de composantes A et B à la somme des composantes C et D étant compris entre 1:1 et 1:7, de préférence entre 1:1,5 et 1:5.

3. Mélange selon l'une des revendications 1 ou 2, caractérisé par au moins l'une des particularités suivantes: l'alkylphénol ou l'aralkylphénol bifonctionnel contient un radical alkyle renfermant de 4 à 12 atomes de carbone, dans le résol phénolique substitué, de 90 à 100% des atomes d'hydrogène réactifs du noyau sont substitués par réaction avec le formaldéhyde; par radical hydroxyméthyle, plus de 0,8 mol d'alcool furfurylique a pris part à la réaction.

4. Mélange selon l'une quelconque des revendications 1 à 3, caractérisé en ce que la résine phénolique modifiée par le furanne a une viscosité de 100 à 10000 mPa·s/20°C, de préférence de 200 à 4000.

5. Mélange selon l'une quelconque des revendications 1 à 4, caractérisé en ce que la résine contient, comme aralkylphénol, un produit de substitution dérivant du phénol et de composés vinylaromatiques, de préférence du styrène, et en ce que le diluant réactif est un composé furannique, de préférence l'alcool furfurylique.

6. Mélange selon l'une quelconque des revendications 2 à 5, caractérisé en ce que le durcisseur est une substance acide qui est présente en une proportion de 0,1 à 1 équivalent, de préférence de 0,2 à 0,5 équivalent, relativement aux groupes OH phénoliques.

7. Mélange selon l'une quelconque des revendications 2 à 6, caractérisé en ce que la charge est sous la forme de coke, de graphite artificiel, de quartz ou de sulfate de baryum.

8. Procédé pour préparer des mélanges destinés à des ciments selon l'une quelconque des revendications 2 à 7, procédé caractérisé en ce qu'on fait réagir à température élevée l'alcool furfurylique avec un résol d'alkylphénol, d'aralkylphénol ou d'arylphénol porteur de radicaux hydroxyméthyles du type indiqué dans les revendications 1 à 7, en ce qu'on dissout le produit réactionnel dans un diluant réactif et qu'on mélange cette solution, juste avant son application, avec une charge et un durcisseur, le rapport pondéral de la somme des composantes A et B à la somme des composantes C et D étant compris entre 1:1 et 1:7, de préférence entre 1:1,5 et 1:5.

9. Procédé selon la revendication 8, caractérisé en ce que la charge est ajoutée sous la forme d'un mélange avec le durcisseur.

10. Procédé selon l'une des revendications 8 ou 9, caractérisé en ce que la solution de la résine dans le diluant réactif a une teneur en résine solide de 40 à 70% en poids.